# EUROPÄISCHE PATENTANMELDUNG

(11) **EP 1 621 367 A1**
(43) Veröffentlichungstag der Anmeldung: **01.02.2006**
(21) Anmeldenummer: 05023023.4
(22) Anmeldetag: 28.01.2000
(51) Int. Cl.: B60C 27/08

(54) **Reifenkette und Verfahren zu ihrer Herstellung**

(30) Priorität: 01.04.1999 DE 19915026
(62) Teilanmeldung aus: 00101630.2
(71) Anmelder: Oberland Schneekettenfabrik Anton Mangold, 82438 Eschenlohe (DE)
(72) Erfinder: Mangold, Christian, 82467 Garmisch-Partenkirchen (DE)
(74) Vertreter: Lang, Friedrich

(57) **Zusammenfassung**

Bei einer Reifenkette mit horizontalen 1 und vertikalen 2 Kettengliedern weisen die Greifstege einen Querschnitt (Q) auf, der entlang der Hochachse (HA) eines horizontalen Kettengliedes (I) ei einer ersten Richtung zunimmt.

## Beschreibung

Die vorliegende Erfindung betrifft eine Reifenkette sowie Verfahren zu ihrer Herstellung nach den Oberbegriffen der unabhängigen Patentansprüche.

Gattungsgemäße Reifenketten sind unter anderem aus der DE 32 12 361 C2, aus der DE 35 11 241 C2 und aus der DE 297 19 672 U1 bekannt. Allen diesen Reifenketten ist gemeinsam, dass im Betrieb, d. h., wenn sie auf dem Reifen eines in Fahrt befindlichen Fahrzeuges oder eines anfahrenden Fahrzeuges montiert sind, durch Greifstege verursachte Quetschkräfte auf das horizontale Kettenglied auftreten, was zu einem entsprechenden Verschleiß führt. Bei den Greifstegen selbst besteht die Gefahr des Kippens gegenüber den horizontalen Kettengliedern. Weiterhin tritt bei den Greifstegen Verschleiß auf an demjenigen Teil ihrer Oberfläche, der der Fahrbahn zugewandt ist. Darüber hinaus ist die Traktionsfähigkeit der Reifenkette trotz Verbesserung gegenüber einer Reifenkette ohne Greifstege beschränkt, was sich in besonders schwierigem Gelände nachteilig auswirkt.

**Aufgabe** der vorliegenden Erfindung ist es, eine Reifenkette anzugeben, deren Kettenglieder einen geringeren durch die Greifstege verursachten Verschleiß aufweisen, deren Greifstege selbst nach Möglichkeit nicht zum Kippen neigen, dadurch kein negativer Winkel erzeugt wird, die einem verminderten Verschleiß unterliegen und bei der weiterhin ihre Traktionsfähigkeit verbessert ist. Aufgabe ist es auch, Verfahren anzugeben, mittels derer eine erfindungsgemäße Reifenkette herstellbar ist.

Diese Aufgabe wird mit einer Reifenkette bzw. mit einem Verfahren zur Herstellung einer Reifenkette gemäß der unabhängigen Ansprüche gelöst. Vorteilhafte Aus- und Weiterbildungen sind in Unteransprüchen gekennzeichnet.

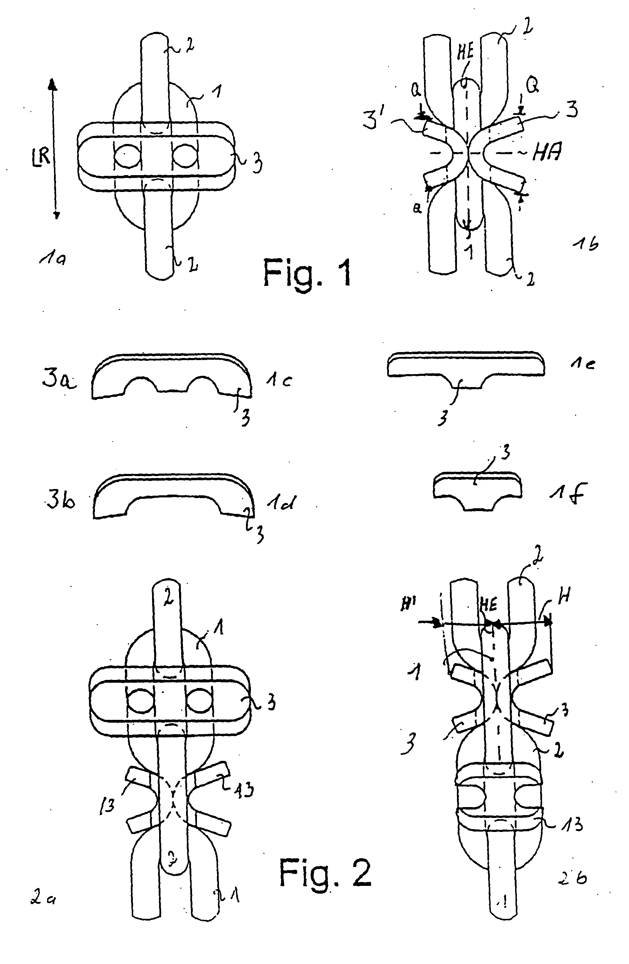

Die Erfindung wird nachstehend anhand der Zeichnung näher erläutert. Diese Zeichnung besteht aus den Figuren 1 bis 16, wobei die Figuren 1 bis 8 und 11 bis 16 noch unterteilt sind in Unterfiguren mit den Zusatzbezeichnungen a, b, c, ggf. auch weitere Buchstaben. Dieser Unterteilung liegt bezüglich der Figuren 1 bis 7 und 12 bis 16 folgende Systematik zugrunde:

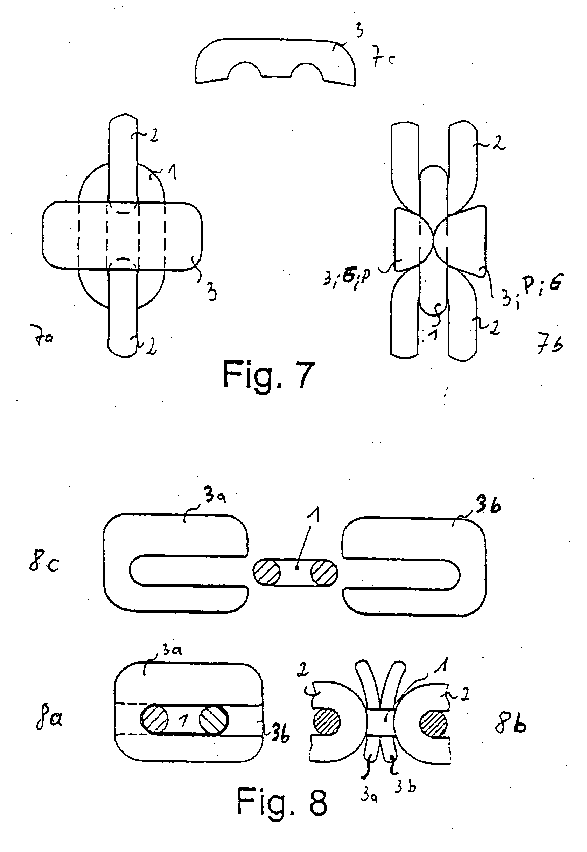

Die Unterfiguren mit der Zusatzbezeichnung "a" zeigen stets "Blickrichtung auf ein horizontales Kettenglied". Die Unterfiguren mit den Zusatzbezeichnungen "b" stehen stets für "Blickrichtung auf ein vertikales Kettenglied", d. h., die Ansicht ist um 90° gegenüber der entsprechenden Unterfigur mit der Zusatzbezeichnung "a" gedreht. Die weiteren Unterfiguren c, d, usw. zeigen jeweils ausschnittsweise Teile von Greifstegen beziehungsweise eine andere Darstellung der jeweiligen Unterfigur "b". Auch bei Figur 8 zeigen die Unterfiguren a und b Ansichten, welche um 90° gegeneinander gedreht sind; die Unterfigur 8c zeigt Einzelheiten.
- Die Figuren: 1, 2, 7, 8, 10 und 11 bis 16 zeigen verschiedene Ausführungsformen der Erfindung.
- Die Figuren: 3 bis 6 zeigen verschiedene Ausführungsformen der Erfindung bei einem Knotenpunkt der Reifenkette.
- Die Figur: 9 zeigt eine Ausführungsform eines Greifstegs.

Figur 1 zeigt ausschnittsweise einen Teil einer erfindungsgemäßen Reifenkette, nämlich zwei vertikale Kettenglieder 2, ein diese verbindendes horizontales Kettenglied 1 sowie zwei Greifstege 3 mit jeweils V-förmigem Querschnitt. Wenn man nun gedanklich unterstellt, dass diese Reifenkette auf einen Reifen aufgezogen sei, so zeigt Figur 1a den dargestellten Ausschnitt der Reifenkette in der Draufsicht auf die Lauffläche des Reifens, während Figur 1 b eine demgegenüber um 90° gedrehte Sicht zeigt, nämlich eine Sicht quer zum Reifen und parallel zu seiner Lauffläche. Figur 1a zeigt die Anordnung der Greifstege 3 quer zur Längsrichtung LR der Reifenkette, d.h., quer zur Ablaufrichtung des (gedachten) Reifens.

Figur 1 b zeigt, dass die Figur 1 insgesamt bereits mehrere vorteilhafte Ausbildungen der erfindungsgemäßen Reifenkette aufweist. Zum einen sind zwei Greifstege 3 mit V-förmigem Querschnitt dargestellt und nicht nur ein einziger (was als solches auch möglich ist), wobei die Schenkel des einen Greifsteges 3 der Straßen- bzw. Untergrundseite zugewandt ist (bei Montage auf ein Rad) und die Schenkel des anderen Greifsteges 3' (welcher optional ist) der Lauffläche des Rades. Insgesamt ergibt sich auf diese Weise ein im wesentlichen X-förmiger Querschnitt. Diese beiden Greifstege 3 sind so angeordnet, dass der eine Greifsteg 3 (im Blick auf die Figur 1 b: der nach rechts zeigende Greifsteg 3) bezüglich der Horizontalebene HE des horizontalen Kettengliedes 1 eine größere Höhe H aufweist, als die benachbarten vertikalen Kettenglieder 2. Dieses Maß H ist, lediglich aus Gründen der Übersichtlichkeit, zwar in Figur 1 b nicht eingezeichnet; es ist jedoch in Figur 2b dargestellt. Dies hat den besonderen Vorteil, dass dieser Greifsteg 3 bei Einsatz in schwierigem Untergrund mehr Kräfte aufnehmen bzw. übertragen kann als wenn er gleich hoch wäre wie die benachbarten vertikalen Kettenglieder 2. Figur 1 b zeigt weiterhin ein Merkmal, welches allen Ausführungsformen gemeinsam ist und welches eine wesentliche Idee bei der vorliegenden Erfindung ist: Der Greifsteg 3 weist, im Querschnitt betrachtet, wie er in Figur 1 b vorliegt, einen Querschnitt Q auf, welcher von der Horizontalebene HE des Horizontalen Kettengliedes 1 aus zunimmt entlang der Hochachse HA des horizontalen Kettengliedes 1, bis er am (vertikalen) Ende des Greifsteges 3 am größten ist. Dies hat den großen Vorteil, dass sich der Greifsteg 3 beim Abrollen eines Reifens samt der erfindungsgemäßen Reifenkette auf einem schwierigen Untergrund (z.B. Fahrbahn mit Schnee, Eis oder mooriges Gelände) stets optimal mit der Fahrbahn bzw. dem Untergrund "verzahnen" kann, wodurch sich ein Maximum an Traktion ergibt.

Weiterhin zeigt Figur 1 bei der Teilfigur 1 b, dass die erfindungsgemäße Reifenkette einen zweiten Greifsteg 3 aufweisen kann, welcher quasi entgegengesetzt zum einen Greifsteg 3 angeordnet ist, d. h. dass er so angeordnet ist, dass sein zunehmender Querschnitt Q sich in eine zur ersten Richtung der Hochachse HA des horizontalen Kettengliedes 1 entgegengesetzte Richtung erstreckt. Diese beiden Greifstege 3 sind miteinander mechanisch fest verbunden, z. B. mittels Schweißen. Sie können aber auch, sei es zusätzlich dazu oder statt dessen, mit dem horizontalen Kettenglied 1 verschweißt sein. Bei einer (nicht dargestellten) Ausführungsform einer Reifenkette mit nur einem einzigen Greifsteg 3 am horizontalen Kettenglied 1 ist der Greifsteg 3 mit dem horizontalen Kettenglied 1 verschweißt. Die Greifstege 3 können durch Schmieden geeigneter Werkstücke hergestellt sein. Sie können aber auch durch Stanzen aus einem Blechband hergestellt sein. Die beiden Greifstege 3 weisen eine bezüglich ihrer Längsachse gebogene Form auf, wie Figur 1 zu entnehmen ist. Der dazu notwendige Biegevorgang kann entweder vor dem Stanzen vorgenommen werden oder danach oder aber beim Schmieden. Aus der Teilfigur 1 b ist auch ersichtlich, dass sich die beiden Greifstege 3 an ihren Außenseiten auf die vertikalen Kettenglieder 2 abstützen. Dies hat den besonderen Vorteil, dass die Quetsch- bzw. Scherkräfte, die auf das horizontale Kettenglied 1 (verursacht durch den Greifsteg 3) einwirken, bei der erfindungsgemäßen Reifenkette geringer sind als bei einer Reifenkette nach dem Stand der Technik.

Figur 1 zeigt in der Teilfigur 1 b auch, dass der eine Greifsteg 3, welcher bei der Montage der Reifenkette auf einem Rad der Fahrbahnseite zugewandt ist (und welcher damit der Lauffläche des Rades abgewandt ist), eine größere Höhe H aufweist als der dem Rad zugewandte Greifsteg 3, jeweils von der Horizontalebene HE des horizontalen Kettengliedes 1 aus betrachtet. Dies hat den Vorteil, dass die Traktionsfähigkeit der Reifenkette größer ist als bei einer Reifenkette, bei der die von der Lauffläche eines Rades abgewandten Greifstege 3 nicht über die Höhe der benachbarten vertikalen Kettenglieder 2 hinaus reichen, während die der Radlauffläche zugewandten Greifstege 3 die Radlauffläche bezüglich Verschleiß optimal schonen, da sie maximal so hoch sind wie die benachbarten vertikalen Kettenglieder 2. Die Teilfiguren 1c bis 1f zeigen Teilansichten verschiedener, möglicher Ausführungsformen von Greifstegen 3.

Figur 7 zeigt in Draufsicht (siehe Teilfigur 7a) und quer dazu (siehe Teilfigur 7b) Greifstege 3, welche aus einem Profildraht P hergestellt sind. Die Teilfigur 7c zeigt eine Teilansicht des Greifsteges 3.

Figur 8 zeigt in der Teilfigur 8a einen Greifsteg 3, welcher aus zwei Teilen 3a, 3b gebildet ist (siehe Teilfigur 8c), die vorzugsweise einander gleich sind. Teilfigur 8a zeigt eine Draufsicht auf den auf ein horizontales Kettenglied 1 aufgeschobenen Greifsteg 3, betrachtet entlang der Längsachse des horizontalen Kettengliedes 1. Die Teilfigur 8b zeigt eine Ansicht quer zur Ansicht nach Teilfigur 8a. Vorzugsweise sind die beiden Teile 3a, 3b miteinander verschweißt.

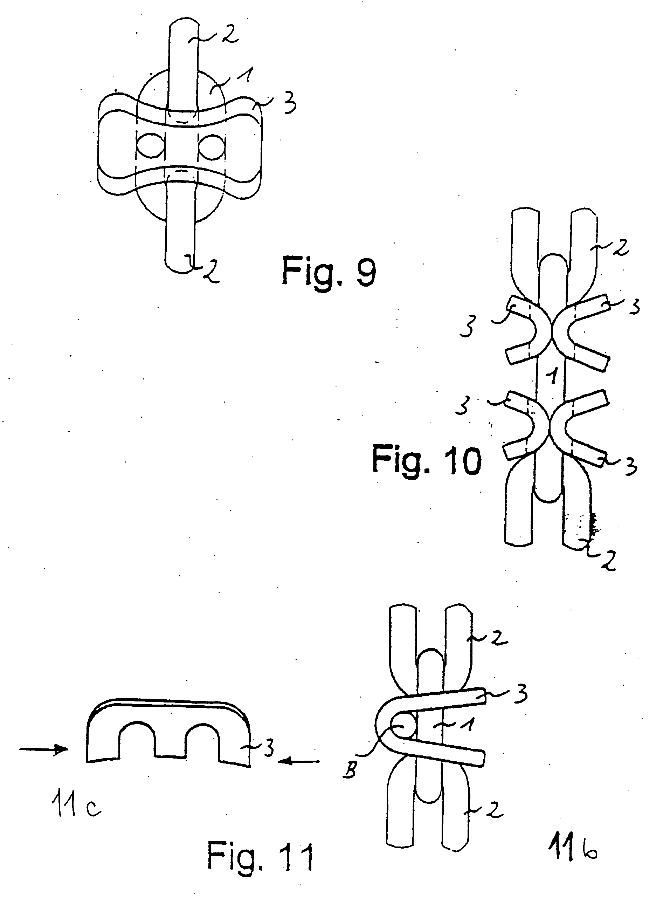

Figur 9 zeigt einen Greifsteg 3 in Draufsicht, welcher, entlang seiner Längsachse betrachtet, an seinen beiden Enden seitlich aufgebogen ist. Bei einer weiteren, nicht dargestellten Ausführungsform des Greifsteges 3 ist dieser lediglich an einem seiner beiden Enden seitlich aufgebogen. Durch dieses Aufbiegen ist die Aufstandsfläche des Greifsteges 3 auf eine Fahrbahn geringer als bei Ausführungsformen, welche nicht aufgebogen sind. Dieses trägt zur Schonung der Fahrbahn und zur Laufruhe bei.

Figur 2 zeigt in ihren Teilfiguren 2a, 2b eine weitere Ausführungsform der erfindungsgemäßen Reifenkette: Dabei weist zusätzlich das vertikale Kettenglied 2 Greifstege 13 auf. Dies hat den besonderen Vorteil, dass auf eine auf ein Rad montierte Reifenkette seitlich einwirkende Kräfte, wie sie z. B. bei Kurvenfahrten oder bei Montage auf Fahrzeuge mit Räumschildern auftreten können, durch die Reifenkette besser beherrschbar sind. Weiterhin wirkt dies verschleißmindernd bezüglich der Längsschenkel der vertikalen Kettenglieder 2.

Figur 10 zeigt eine Ausführungsform einer erfindungsgemäßen Reifenkette, bei der an einem horizontalen Kettenglied 1 nebeneinander jeweils zwei Greifstege 3 montiert sind in Richtung Fahrbahnseite und zwei Greifstege 3 in Richtung Radoberfläche. Eine solche Anordnung läßt sich dann verwenden, wenn die Länge des horizontalen Kettengliedes 1 mindestens das fünffache desjenigen Betrages beträgt, der dem Durchmesser der Kettenschenkel entspricht. Das Vorsehen von mehreren Greifstegen 3 entsprechend der Figur 10 bewirkt eine weitere Steigerung der Traktionsfähigkeit der Reifenkette.

Figur 11 zeigt in der Teilfigur 11 b eine Ausführungsform mit nur einem einzigen Greifsteg 3 am horizontalen Kettenglied 1. Im Gegensatz zu den zuvor beschriebenen Ausführungsformen endet (bzw. beginnt) dieser Greifsteg 3 nicht am horizontalen Kettenglied 1, sondern er ist zu beiden Seiten desselben (1) angeordnet. Dabei nimmt der eingangs genannte Querschnitt Q des Greifstegs 3 von der Horizontalebene HE des horizontalen Kettengliedes 1 aus zu in der ersten Richtung der Hochachse HA (in Figur 11a: nach rechts), während er in einer zweiten Richtung, die der ersten Richtung entgegengesetzt ist(in Figur 11 b: nach links), abnimmt. Auch bei dieser Ausführungsform stützt sich der Greifsteg 3 an den Schenkeln der benachbarten vertikalen Kettenglieder 2 ab mit denselben Vorteilen wie bereits beschrieben. Als Befestigungsmöglichkeit des Greifstegs 3 am horizontalen Kettenglied 1 sind mehrere Möglichkeiten gegeben. In Figur 11 b ist dazu ein Bolzen B vorgesehen, der zwischen dem Greifsteg 3 und dem horizontalen Kettenglied 1 angeordnet ist. Eine sichere Befestigung des Greifstegs 3 am horizontalen Kettenglied 1 ist in Figur 11 b durch Verschweißen des Bolzens B entweder mit dem Greifsteg 3 oder mit dem horizontalen Kettenglied 1 gegeben. Ergänzend dazu sind auch Schweißverbindungen zwischen den Greifstegen 3 und dem horizontalen Kettenglied 1 möglich. Es kann auch eine ausschließlich formschlüssige Fixierung des Bolzens B dadurch erreicht werden, dass seine beiden Enden aufgeweitet oder abgebogen werden. Alternativ dazu ist es auch möglich, den Bolzen B wegzulassen und den Greifsteg 3 mittels Quetschen seiner Schenkel an seinem einen Ende mit dem horizontalen Kettenglied 1 mechanisch fest zu verbinden. Figur 11 c zeigt einen Teil, nämlich knapp die Hälfte, des Greifstegs 3. Die in Figur 11c angebrachten Pfeile deuten an, wo die Quetschkräfte anzusetzen sind, um die vorgenannte Quetsch- bzw. Klemmverbindung zu erzielen.

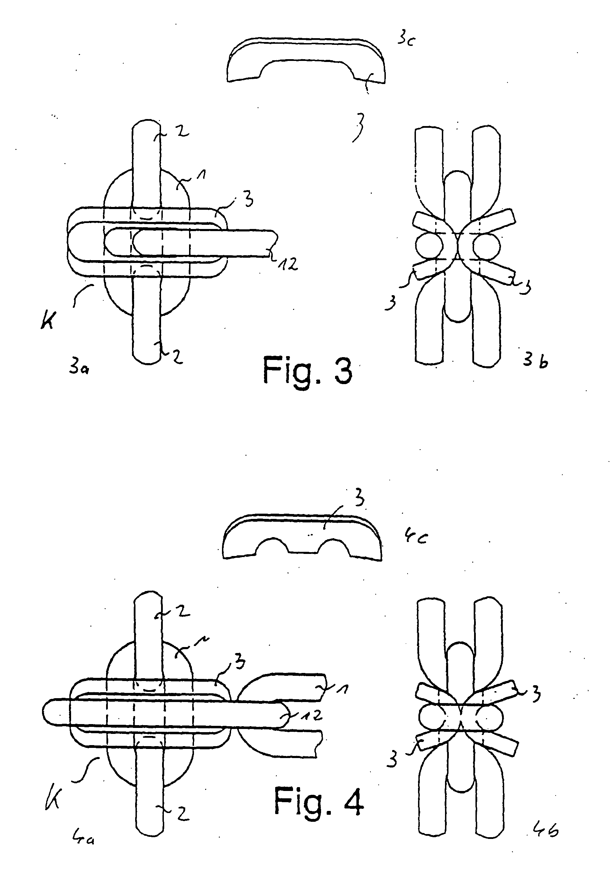

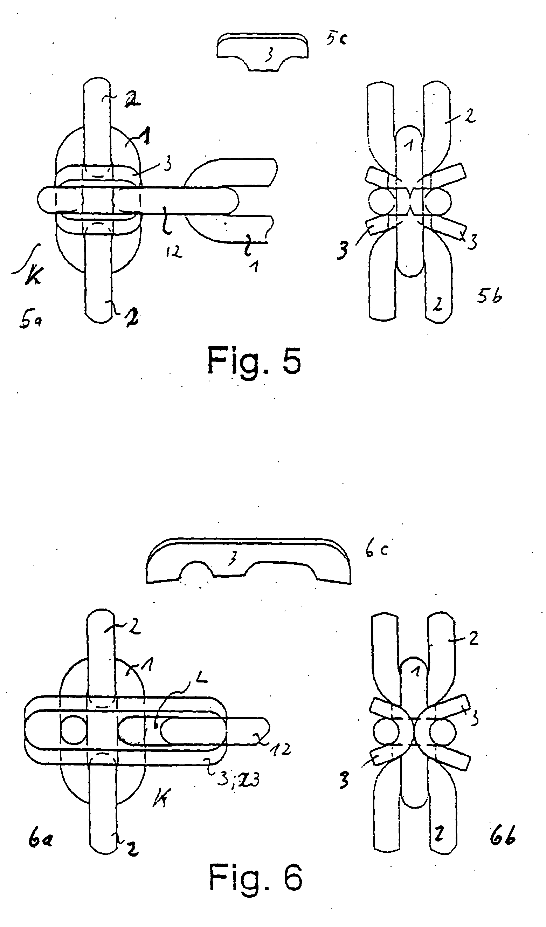

Die Figuren 3 bis 6 zeigen verschiedene Ausführungsformen der erfindungsgemäßen Reifenkette, bei denen der Greifsteg 3 auf einem horizontalen Kettenglied 1 an einem Knotenpunkt K der Reifenkette angeordnet ist. Die mit dem Buchstaben "a" bezeichneten Teilfiguren zeigen dies jeweils in Draufsicht, während die mit dem Buchstaben "b" bezeichneten Teilfiguren eine demgegenüber um 90° gedrehte Ansicht zeigen. Die Teilfiguren 3c, 4c, 5c und 6c zeigen jeweils Teilansichten der Greifstege 3. Bei der Ausführungsform nach Figur 3 ist ein am Knotenpunkt K abzweigendes vertikales Kettenglied 12 sowohl in das horizontale Kettenglied 1 wie auch in den zugehörigen Greifsteg 3 eingehängt. In den Ausführungsformen nach den Figuren 4 und 5 umfasst ein am Knotenpunkt K abzweigendes vertikales Kettenglied 12 sowohl das horizontale Kettenglied 1 wie auch die zugehörigen Greifstege 3. Der Unterschied zwischen diesen beiden Ausführungsformen liegt in der Breite der verwendeten Greifstege 3: Bei Figur 4 ist der Greifsteg 3 länger als das horizontale Kettenglied 1 breit ist, während bei Figur 5 die Länge des Greifsteges 3 gleich der Breite des horizontalen Kettengliedes 1 ist. Bei den Ausführungsformen nach den Figuren 4 und 5 kann ein Verschweißen der Greifstege 3 mit dem horizontalen Kettenglied 1 im Bereich des Knotenpunkts K entfallen, da das vertikale Kettenglied 12 einen sicheren Sitz der Greifstege 3 auf dem horizontalen Kettenglied 1 bewirkt. Bei den Ausführungsformen nach den Figuren 4 und 5 ist es auch möglich, die gesamte Reifenkette mit den vorteilhaften Greifstegen 3 völlig ohne Schweißen an den Greifstegen 3 herzustellen, nämlich durch einfaches Umbiegen.

Bei der Ausführungsform nach Figur 6 ist der Greifsteg 3 als ein Langloch L aufweisender Greifsteg 23 ausgebildet. In dieses Langloch L ist das am Knotenpunkt K abzweigende vertikale Kettenglied 12 eingehängt. Das abzweigende vertikale Kettenglied 12 ist somit in einem vorgegebenen Winkel zu den vertikalen Kettengliedern 2 angeordnet. Bei Figur 6 beträgt dieser Winkel 90°.

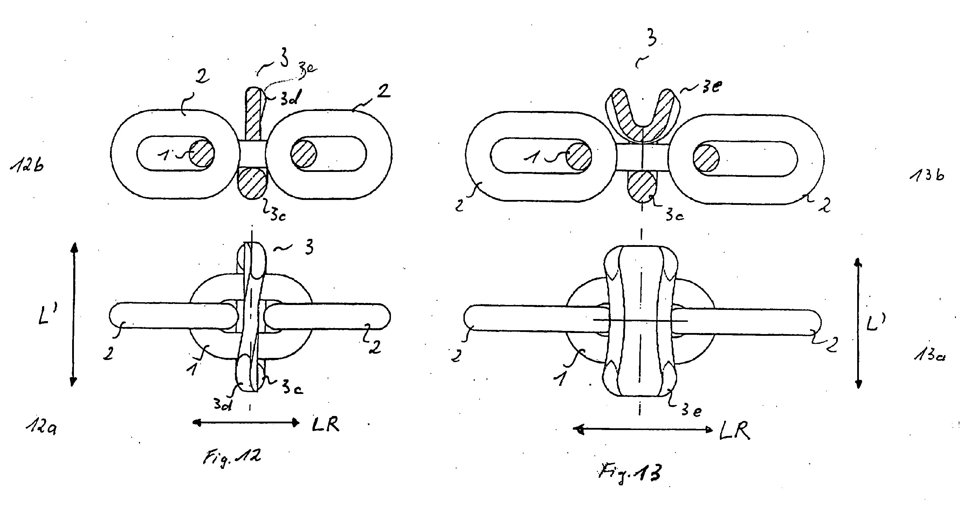

Figur 12 zeigt ein weiteres Ausführungsbeispiel einer erfindungsgemäßen Reifenkette. Bei dieser Ausführungsform ist der Greifsteg 3 zweiteilig ausgeführt, d. h. er besteht aus einem ersten U-förmigen Teil 3c und einem im Wesentlichen geraden zweiten Teil 3d, welches die freien Enden der U-Schenkel überbrückt und mit diesen verschweißt ist. Das erste Teil 3c weist einen runden Querschnitt auf. Es kann aus einem üblichen Kettenglied hergestellt sein, welches der Länge nach halbiert wurde. Das zweite Teil 3d ist aus einem flachen Blechband hergestellt und in sich verschränkt. Die nach außen gerichtete Kante des Teils 3d weicht somit von einer Geraden ab und seine freien Enden 3e ragen aus der Bandebene heraus und verbessern somit die Greifeigenschaften. Die nach außen gerichteten Kanten weisen einen Winkel von bis zu 45° Grad zur Blechbandebene auf.

Bei einer nicht dargestellten Ausführungsform, die ähnlich der Ausführungsform nach Figur 12 ist, ist der gesamte Greifsteg 3 aus einem Blechband hergestellt, zu einem Greifsteg gebogen und mit sich selbst verbunden, beispielsweise mittels Schweißen, d. h. also, der Greifsteg 3 ist einstückig und er umschlingt das horizontale Kettenglied. Dabei ist der Greifsteg 3 in sich selbst verschränkt, analog dem zweiten Teil 3d nach Figur 12.

In der Ausführungsform nach Figur 13 ist der Greifsteg 3 ebenfalls zweiteilig ausgeführt mit einem ersten U-förmigen Teil 3c, welcher gleich sein kann dem ersten Teil 3c der Ausführungsform nach Figur 12. Das zweite Teil 3 ist aus einem Blechteil gebildet, welches einen im Wesentlichen V-förmigen Querschnitt aufweist, der sich nach außen hin, das heißt, von der Reifenkette weg, öffnet. Die beiden Teile 3c, 3e sind wiederum miteinander verbunden, beispielsweise mittels Schweißen. In Weiterbildung dieser Ausführungsform ist es vorteilhaft, wenn die beiden Enden des zweiten Teils 3e nach außen aufgeweitet sind, so dass dort der V-förmige Querschnitt weiter ist als im mittleren Bereich des zweiten Teils 3e.

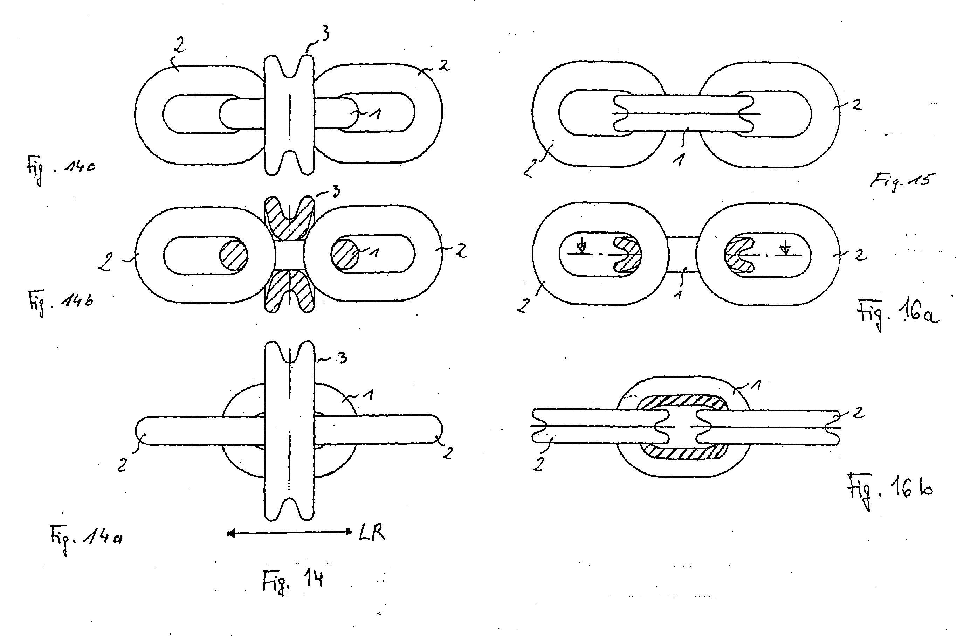

Bei der Ausführungsform nach Figur 14 ist der Greifsteg 3 einstückig ausgebildet aus einem Profildraht mit einem V-förmigen Querschnitt. Dabei ist der Profildraht zu einem Greifsteg 3 gebogen, welcher das horizontale Kettenglied 1 vollständig umschlingt.

Bei den Ausführungsformen nach den Figuren 12 bis 14 weist die Reifenkette, auch wenn vorstehend nicht extra erwähnt, selbstverständlich außer dem Greifsteg 3 auch horizontale (1) und vertikale Kettenglieder 2 auf.

Figur 15 zeigt eine erfindungsgemäße Reifenkette, bei der das vertikale Kettenglied 1 aus einem Profildraht gebildet ist, welches einen im Wesentlichen V-förmigen Querschnitt aufweist. Es ist zu einem geschlossenen Kettenglied gebogen, welches als vertikales Kettenglied in einem Kettenstrang integriert ist. Bei einem derartigen Kettenstrang sind beispielsweise allen vertikalen Kettenglieder in der beschriebenen Weise ausgebildet und die horizontalen Kettenglieder sind auf herkömmliche Weise aus Stahldraht mit rundem Querschnitt gebildet.

Bei der erfindungsgemäßen Reifenkette nach Figur 16 sind sowohl horizontale als auch vertikale Kettenglieder 2 aus einem Profildraht gebildet, welcher einen im wesentlichen V-förmigen Querschnitt aufweist und zu einem geschlossenen Kettenglied gebogen ist.

Die Ausführungsformen nach den Figuren 15 und 16 sind nicht auf Reifenketten ohne Greifstege beschränkt, auch wenn solche nicht dargestellt sind. Sie können selbstverständlich zusätzlich auch Greifstege aufweisen. Allerdings wurde auf deren Darstellung aus Gründen der Übersichtlichkeit verzichtet.

Bei einem ersten Herstellungsverfahren der erfindungsgemäßen Reifenkette wird der Greifsteg 3 durch entsprechendes Ablängen aus einem Profildraht P gewonnen, an das horizontale Kettenglied 1 angelegt, und mit einem von der anderen Seite des Kettengliedes 1 angelegten Gegenstück G mechanisch stabil verbunden, beispielsweise mittels Schweißen. Dieses Gegenstück K kann vorzugsweise ein weiterer Greifsteg 3 sein.

Bei einem zweiten Herstellverfahren wird der Greifsteg 3 aus zwei Formteilen 3a, 3b hergestellt. Diese werden gegeneinander über das horizontale Kettenglied 1 geschoben und miteinander mechanisch stabil verbunden (z. B. mit Schweißen). Dadurch weist das horizontale Kettenglied 1 zwei Greifstege 3 auf. Vorteilhaft ist es, wenn die beiden Formteile 3a, 3b einander gleich sind.

Bei einem dritten Herstellverfahren wird der Greifsteg 3 aus einem Blechband gestanzt, geeignet um seine Längsachse gebogen, was zu einer Art V-förmigem Aussehen führt, und dann mit dem horizontalen Kettenglied 1 mechanisch stabil verbunden.

Bei einem vierten Herstellverfahren wird der Greifsteg 3 durch Schmieden eines geeigneten Werkstücks hergestellt und dann mit dem horizontalen Kettenglied 1 mechanisch stabil verbunden.

Bei diesen Herstellverfahren kann das mechanisch stabile Verbinden Von Greifsteg 3 und Kettenglied 1 bzw. 2 entweder mittels Schweißen oder, bei entsprechender Ausgestaltung der Greifstege 3, durch miteinander Verklemmen erfolgen.

Soweit bei den letzten beiden genannten Herstellverfahren auf der dem Greifsteg 3 gegenüberliegenden Seite des horizontalen Kettenglieds 1 ebenfalls ein Greifsteg 3 angeordnet wird, kann anstelle der Verbindung mit dem horizontalen Kettenglied 1 oder zusätzlich dazu eine mechanisch feste Verbindung der beiden Greifstege 3 miteinander vorgesehen werden.

Ein weiteres erfindungsgemäßes erfindungsgemäßen Verfahren zur Herstellung einer Reifenkette, wie sie beispielhaft in den Figuren 14 bis 16 dargestellt ist, besteht darin, dass Walzdraht zu einem Profildraht mit V-förmigem Querschnitt gezogen wird, und aus dem Profildraht die Greifstege (3) oder Kettenglieder gebogen werden.

Insgesamt weist die erfindungsgemäße Reifenkette folgende Vorteile gegenüber solchen nach dem Stand der Technik auf:
- weniger Verschleiß, da jeder an der vom Reifen abgewandten Seite der horizontalen Kettenglieder 1 angeordnete Greifsteg 3 Aufstandsflächen aufweist, die mit dem Untergrund (z. Fahrbahn, Schnee) in Kontakt treten;
- bessere Traktion, da der Greifsteg 3 immer im positiven Winkel zu seiner Wirkrichtung steht;
- bessere Verteilung der Belastung, dadurch höhere Laufruhe, geringerer Reifenverschleiß, geringere Fahrbahnabnutzung;
- die Greifstege 3 können nicht kippen, da sie sich seitlich auf die benachbarten vertikalen Kettenglieder 2 abstützen;
- geringere Bruchneigung durch Abstützung im Innenbereich der beiden Längsschenkel des horizontalen, ggf. auch des vertikalen Kettengliedes, insbesondere bei Kettengliedern, deren Länge mindestens das 3-fache des Durchmessers ihrer Schenkel beträgt;
- Montage der Greifstege auch auf vertikalen Kettengliedern möglich,
- bei Montage auf vertikale Kettenglieder bessere Aufnahme von auftretenden Querkräften;
- bei den Ausführungsformen nach den Figuren 3 bis 5 können an den Knotenpunkten K die gleichen Greifstege 3 verwendet werden wie bei den sonstigen horizontalen (ggf. auch vertikalen) Kettengliedern: Senkung der Herstellkosten durch mehr Gleichteile;
- bei einem Kettenglied können verschieden geformte Greifstege miteinander verschweißt werden;
- Verwendung mehrerer Greifstege pro Kettenglied nebeneinander, sofern die Kettenglieder eine Länge aufweisen, die mindestens fünfmal so groß ist wie der Durchmesser ihrer Schenkel.

Zusammenfassend werden die aufgezählten Vorteile durch die im Folgenden aufgelisteten Merkmale der Punkte 1 bis 33 erreicht:
1. Reifenkette mit einem horizontalen 1 und wenigstens zwei vertikalen 2 Kettengliedern und mit einem am horizontalen Kettenglied 1 quer zu dessen Längsrichtung L angeordneten Greifsteg 3, wobei der Greifsteg 3 vollständig aus massivem Material besteht und einen Querschnitt Q aufweist, der, ausgehend von der Horizontalebene HE des horizontalen Kettengliedes 1, entlang der Hochachse HA des horizontalen Kettengliedes 1 in einer ersten Richtung der Hochachse HA zunimmt.
2. Reifenkette nach 1, wobei entlang der Längsrichtung des Greifstegs 3 zwischen dem Greifsteg 3 und dem horizontalen Kettenglied 1 ein Bolzen B angeordnet ist.
3. Reifenkette nach 1 oder 2, wobei der Greifsteg 3 mittels Schweißen mit dem horizontalen Kettenglied 1 zumindest mittelbar verbunden ist.
4. Reifenkette nach einem der Punkte 1 bis 3, wobei der Greifsteg 3 mit dem horizontalen Kettenglied verklemmt ist.
5. Reifenkette nach einem der Punkte 1 bis 4, wobei der Greifsteg 3 aus einem Profildraht P hergestellt ist.
6. Reifenkette nach einem der Punkte 1 bis 4, wobei der Greifsteg 3 durch Schmieden hergestellt ist.
7. Reifenkette nach einem der Punkte 1 bis 4, wobei der Greifsteg 3 aus einem Blechband gestanzt ist und V-förmig gebogen ist.
8. Reifenkette nach einem der vorhergehenden Punkte, wobei der Greifsteg 3 aus zwei Teilen 3a und 3b gebildet ist, die von beiden Seiten des horizontalen Kettengliedes 1 über dieses geschoben sind und die nach dem Schieben über das horizontale Kettenglied 1 miteinander verbunden sind.
9. Reifenkette nach einem der vorhergehenden Punkte, wobei sich der Greifsteg 3 mit seinen Außenseiten auf benachbarte vertikale Kettenglieder 2 abstützt.
10. Reifenkette nach einem der vorhergehenden Punkte, wobei der Greifsteg 3 in dem Bereich, in dem er nach Auflegen der Reifenkette auf einen Reifen von der Reifenoberfläche abgewandt ist, eine größere Höhe H aufweist, als benachbarte vertikale Kettenglieder 2, von der Horizontalebene HE des horizontalen Kettengliedes 1 aus betrachtet.
11. Reifenkette nach einem der vorhergehenden Punkte , wobei das horizontale Kettenglied 1 mehr als einen Greifsteg 3 aufweist.
12. Reifenkette nach einem der vorhergehenden Punkte, wobei der Greifsteg 3 an wenigstens einem seiner beiden Enden seitlich aufgebogen ist.
13. Reifenkette nach einem der vorhergehenden Punkte, wobei der Greifsteg 3 an einem horizontalen Kettenglied 1 angeordnet ist, welches einen Knotenpunkt K der Reifenkette bildet.
14. Reifenkette entsprechend Punkt 13, wobei der Greifsteg 3 als ein Langloch L aufweisender Greifsteg 23 ausgebildet ist.
15. Reifenkette entsprechend Punkt 14, wobei im Langloch L des dieses aufweisenden Greifstegs 23 ein drittes, vertikales Kettenglied 12 eingehängt ist, welches in einem vorgegebenen Winkel zu den beiden anderen vertikalen Kettengliedern 2 verläuft.
16. Reifenkette nach einem der vorhergehenden Punkte, wobei auch am vertikalen Kettenglied 2 mindestens ein Greifsteg 3 angeordnet ist.
17. Reifenkette gemäß Punkt 16, wobei am vertikalen Kettenglied 2 mehr als ein Greifsteg 3 angeordnet ist.
18. Reifenkette gemäß Punkt 16, wobei der Greifsteg 3, 13, 23 durch die Schenkel eines den Greifsteg 3, 13, 23 umschließenden Kettengliedes formschlüssig gehalten ist.
19. Reifenkette mit einem horizontalen 1 und wenigstens zwei vertikalen 2 Kettengliedern und mit einem am horizontalen Kettenglied 1 quer zu dessen Längsrichtung L angeordneten Greifsteg 3, wobei der Greifsteg 3 aus einem Profilmaterial mit rechteckigem Querschnitt gebildet und zumindest in einem Bereich in sich verschränkt ist, welcher der Lauffläche zugewandt ist.
20. Reifenkette entsprechend Punkt 19, wobei der Greifsteg 3 wenigstens zweiteilig ausgeführt ist, mit einem ersten U-förmigen Teil und einem zweiten Teil 3c, welches aus einem Blechband hergestellt und in sich verschränkt ist, und bei dem die beiden Teile 3c und 3d miteinander verbunden sind.
21. Reifenkette gemäß Punkt 19, wobei der Greifsteg wenigstens zweiteilig ausgeführt mit einem U-förmigen ersten Teil 3c und einem zweiten Teil 3e, welches aus einem Blechteil mit einem etwa V-förmigen Querschnitt hergestellt ist, und bei dem die beiden Teile 3c und 3e miteinander verbunden sind.
22. Reifenkette gemäß Punkt 21, wobei das zweite Teil (3e) an seinen Enden bezüglich seines im Wesentlichen V-förmigen Querschnitts aufgeweitet ist.
23. Reifenkette gemäß einem der Punkte 20 bis 22, wobei die beiden Teile 3c und 3d oder 3e mittels Schweißen miteinander verbunden sind.
24. Reifenkette mit einem horizontalen 1 und wenigstens zwei vertikalen 2 Kettengliedern und mit einem am horizontalen Kettenglied 1 quer zu dessen Längsrichtung L angeordneten Greifsteg 3, wobei der Greifsteg 3 aus einem Profildraht gebildet ist, welcher einen im wesentlichen V-förmigen Querschnitt aufweist und welcher zu einem geschlossenen Glied gebogen ist.
25. Reifenkette mit einem horizontalen 1 und einem vertikalen 2 Kettenglied, wobei das vertikale Kettenglied 2 aus einem Profildraht gebildet ist, welches einen im wesentlichen V-förmigen Querschnitt aufweist und welches als geschlossenes Kettenglied gebogen und in einen Kettenstrang integriert ist.
26. Reifenkette mit einem horizontalen 1 und einem vertikalen 2 Kettenglied insbesondere gemäß Punkt 25, wobei horizontale 1 und vertikale 2 Kettenglieder aus einen Profildraht gebildet sind, welcher einen im Wesentlichen V-förmigen Querschnitt aufweist und welcher als geschlossene Kettenglieder gebogen ist.
27. Verfahren zum Herstellen einer Reifenkette mit den Merkmalen gemäß einem der Punkte 1 bis 26, wobei der Greifsteg 3 nach entsprechendem Ablängen aus einem Profildraht P an das horizontale Kettenglied 1 angelegt wird und dass er mit einem geeigneten Gegenstück G, welches auf der anderen Seite des horizontalen Kettengliedes 1 angelegt wird, mechanisch stabil verbunden wird.
28. Verfahren zum Herstellen einer Reifenkette mit den Merkmalen gemäß einem der Punkte 1 bis 26, wobei der Greifsteg 3 aus zwei Formteilen 3a und 3b hergestellt wird, die gegeneinander über das horizontale Kettenglied 1 geschoben werden und dann miteinander mechanisch stabil verbunden werden.
29. Verfahren zum Herstellen einer Reifenkette mit den Merkmalen gemäß einem der Punkte 1 bis 26, wobei der Greifsteg 3, 13, 23 aus einem Blechband gestanzt wird zu einer Platine und dass diese Platine anschließend gebogen wird.
30. Verfahren zum Herstellen einer Reifenkette mit den Merkmalen gemäß einem der Punkte 1 bis 26, wobei der Greifsteg 3 durch Schmieden hergestellt wird.
31. Verfahren gemäß einem der Punkte 27 bis 30, wobei die mechanisch stabile Verbindung mittels Schweißen erfolgt.
32. Verfahren gemäß einem der Punkte 27 bis 31, wobei die mechanisch stabile Verbindung durch Klemmen erfolgt.
33. Verfahren zur Herstellung einer Reifenkette gemäß einem der Punkte 24 oder 25, wobei Walzdraht zu einem Profildraht mit V-förmigem Querschnitt gezogen wird und aus dem Profildraht Greifstege 3 oder Kettenglieder gebogen werden.

## Patentansprüche

1. Reifenkette mit einem horizontalen (1) und wenigstens zwei vertikalen (2) Kettengliedern und mit einem am horizontalen Kettenglied (1) quer zu dessen Längsrichtung (L) angeordneten Greifsteg (3),
**dadurch gekennzeichnet,**
**dass** der Greifsteg (3) aus einem Profildraht gebildet ist, welcher einen im wesentlichen V-förmigen Querschnitt aufweist und welcher zu einem geschlossenen Glied gebogen ist.

2. Reifenkette mit einem horizontalen (1) und einem vertikalen (2) Kettenglied,
**dadurch gekennzeichnet,**
**dass** das vertikale Kettenglied (1) aus einem Profildraht gebildet ist, welches einen im wesentlichen V-förmigen Querschnitt aufweist und welches als geschlossenes Kettenglied gebogen und in einen Kettenstrang integriert ist.

3. Reifenkette mit einem horizontalen (1) und einem vertikalen (2) Kettenglied, insbesondere nach Anspruch 3,
**dadurch gekennzeichnet,**
**dass** horizontale und vertikale Kettenglieder (2) aus einem Profildraht gebildet sind, welcher einen im wesentlichen V-förmigen Querschnitt aufweist und welcher als geschlossene Kettenglieder gebogen ist.

4. Verfahren zur Herstellung einer Reifenkette mit den Merkmalen nach einem der Ansprüche 1 bis 3,
**dadurch gekennzeichnet,**
**dass** der Greifsteg (3) nach entsprechendem Ablängen aus einem Profildraht (P) an das horizontale Kettenglied (1) angelegt wird und dass er mit einem geeigneten Gegenstück (G), welches auf der anderen Seite des horizontalen Kettengliedes (1) angelegt wird, mechanisch stabil verbunden ist.

5. Verfahren zur Herstellung einer Reifenkette mit den Merkmalen nach einem der Ansprüche 1 bis 3,
**dadurch gekennzeichnet,**
**dass** der Greifsteg (3) aus zwei Formteilen (3a, 3b) hergestellt wird, die gegeneinander über das horizontale Kettenglied (1) geschoben werden und dann miteinander mechanisch stabil verbunden werden.

6. Verfahren zur Herstellung einer Reifenkette mit den Merkmalen nach einem der Ansprüche 1 bis 3,
**dadurch gekennzeichnet,**
**dass** der Greifsteg (3, 13, 23) aus einem Blechband gestanzt wird zu einer Platine und dass diese Platine anschließend gebogen wird.

7. Verfahren zur Herstellung einer Reifenkette mit den Merkmalen nach einem der Ansprüche 1 bis 3,
**dadurch gekennzeichnet,**
**dass** der Greifsteg (3) durch Schmieden hergestellt wird.

8. Verfahren nach einem der Ansprüche 4 bis 7,
**dadurch gekennzeichnet,**
**dass** die mechanische stabile Verbindung mittels Schweißen erfolgt.

9. Verfahren nach einem der Ansprüche 4 bis 8,
**dadurch gekennzeichnet,**
**dass** die mechanische stabile Verbindung durch Klemmen erfolgt

10. Verfahren zur Herstellung einer Reifenkette mit den Merkmalen nach Anspruch 1 oder 2,
**dadurch gekennzeichnet,**
**dass** Walzdraht zu einem Profildraht mit V-förmigem Querschnitt gezogen wird und aus dem Profildraht Greifstege (3) oder Kettenglieder gebogen werden.
